# EUROPEAN PATENT APPLICATION

(11) **EP 3 620 692 A1**
(43) Date of publication of application: **11.03.2020**
(21) Application number: 19192233.5
(22) Date of filing: 19.08.2019
(51) Int. Cl.: F16J 15/06, F01D 11/00, F01D 25/28, F16J 15/08

(54) **SEAL ARRANGEMENT**

(30) Priority: 06.09.2018 GB 201814484
(71) Applicant: Rolls-Royce plc, London N1 9FX (GB)
(72) Inventor: Ingley, Lucian, Derby, Derbyshire DE24 8BJ (GB)
(74) Representative: Rolls-Royce plc

(57) **Abstract**

An elongate compressible seal (52) is provided for sealing between a first component (50) and a second component (54), the seal comprising a plurality of elongate members (51) each attached at a first end to an outer surface of the seal for aiding positioning of the seal.

## Description

The present disclosure concerns a seal, a sealing arrangement and a method of forming a sealing arrangement.

Seals between two components are generally flexible members that contact portions of each component in a compression fit. The flexibility of the seal and the compression fit ensure that the seal contacts and seals along the entire sealing portions of each component.

Seals can be safety critical, for example where transference of a gas or liquid across the seal would cause a safety incident. Seals may also form part of a fire boundary. In these situations it is of greater importance that the seal is robust and adequately seals along the length of the seal.

However once the components are installed, the seal is harder to access. If the seal contributes to a fully enclosed space, it is possible that after the components are installed next to each other there is no access to the seal, or only limited access to the seal. It is therefore desirable to have a seal that can be reliably positioned.

According to a first aspect there is provided an elongate compressible seal for sealing between a first component and a second component, the seal comprising a plurality of elongate members each attached at a first end to an outer surface of the seal for aiding positioning of the seal.

According to a second aspect there is provided a sealing arrangement comprising a first component and a seal as claimed herein. Optionally the seal is attached to the first component.

According to a third aspect there is provided a method of forming a sealing arrangement as claimed herein, the method comprising the step of pulling one or more elongate members to position the seal in a compression fit within the recess.

The seal may be suitable for sealing along the edge of a component. The seal may have a length, a seal bridging dimension and a thickness. The seal may have a length much greater (for example greater than 5, 10 or 20 times) a dimension of a cross section of the seal (for example a seal bridging dimension or thickness). The seal may have a constant cross section along its length. The seal may be solid. The seal may be tubular or hollow. The seal may comprise holes to allow air in and out of the hollow interior of the seal. The holes may be advantageous when the seal operates in environments where the external pressure changes, for example at altitude.

The plurality of elongate members may each be at a different position along the length of the seal. There may be more than 5, 10, 15 or 20 elongate members. An elongate member may have a length greater than 3, 5, 7, 10 or 20 times its width, thickness or diameter.

An (for example each) elongate member may comprise a pulling feature. The pulling feature may have a shape that corresponds with a pulling tool. The pulling feature may aid gripping of the elongate member.

An (for example each) elongate member may have a substantially constant cross section. An (for example each) elongate member may have a different flexibility at different points along its length. For example the elongate member may be more or less flexible at its base. This may allow easier positioning of the elongate member for gripping and pulling, or ensure the elongate member lies flat. An (for example each) elongate member may be integral with the seal.

The sealing arrangement may further comprise a second component and a recess between the first component and second component. The elongate members may be suitable for pulling the seal, from a position external to the first component and second component, into a compression fit within the recess.

The seal may be shaped to correspond to the shape of the recess. The seal may be larger than the recess in an uncompressed state. The elongate members may be positioned at locations where the seal is harder to fit in the recess, for example corners of the first component and/or second component.

The recess may comprise opposing walls. The separation of the opposing walls, when the first component and second component are installed next to each other, may define the sealing distance. An installed position may be suitable for operation of the product. The seal may bridge between the walls. The opposing walls may be (for example substantially) parallel. The opposing walls may be separated by a distance smaller than the seal bridging dimension of the seal. This may provide a compression fit to the seal.

The first component and second component may have a first side and a second side. The first side may face an internal position in the product. The second side may face a position external to the product. The recess may be in the first side. The elongate members may be suitable for being pulled from the second side (for example a position external or distal to the second side).

The seal may be attached to the first component along the length of the seal.

An (for example each) elongate member may be suitable for extending from the recess to the second side. An (for example each) elongate member may be suitable for extending from the recess, or a position adjacent the recess, beyond and/or into the second side such that it can be gripped and pulled from the second side (for example a position external or distal to the second side).

A compression fit may be such that the seal is held in position by compressive forces. A compression fit may be such that the seal is compressed by more than 10%, 20%, 30%, 40% or 50% in a direction (for example in the direction of the seal bridging dimension).

When the first component and second component are in an installed position, an elongate member may be accessible through a gap in the first component and/or second component.

The gap may be between the first and second components. The gap may be a through hole in the first and/or second component.

The recess may comprise a sealing distance, and wherein when uncompressed the seal may have a seal bridging dimension greater than 1.1, 1.2, 1.3, 1.4 or 1.5 the sealing distance.

The seal according to any one of the previous claims, wherein the seal is suitable for accommodating relative movement of the first and second component towards and away from each other during use, for example due to thermal or mechanical effects, for example by a relatively large bridging dimension.

Installation of the second component relative to the first component may urge the compressible seal away from the recess.

The installation may urge the compressible seal out of the recess.

The sealing arrangement may be advantageous for seals that have a larger seal bridging dimension compared to the sealing distance as these seals are more likely to be urged out of the desired sealing configuration during installation.

The second component may be installed in a direction perpendicular to the direction that the seal extends away from the first component. The seal may be urged in a direction coincident with the direction of installation.

The first component and second component may be panels. The second component may be a panel and the first component may comprises a cut-out that the second component is installed into.

The elongate members may be attached to the seal such that they lie substantially flat when not aiding positioning of the seal.

Substantially flat may be flat or lying at a shallow angle with respect to the surface of the seal. Substantially flat may be positioned such that the elongate member does not protrude beyond an outer surface of the first component and/or second component (for example the second side) when not aiding positioning. The elongate members may be flexible (for example to be bent away from the seal for aiding positioning). The elongate members may be rigid enough that during operation, for example of the product that the first component and second component form a part of, they hold substantially the same position. For example if the product is a gas turbine engine, this prevents the elongate members interacting with the air flow through the engine.

The first component and second component may be panels of a gas turbine engine.

The seal may be a fire seal, for example suitable for sealing in fire conditions. The fire seal may be a core fairing fire seal of a gas turbine engine.

A fire seal may require a higher level of reliability of positioning. A fire seal may have an outer layer of a fire resistant material. The fire resistant material may increase the rigidity of the seal. The fire resistant material may be more rigid than the seal. A fire seal may be more rigid than a seal that is not required to provide a fire boundary. A more rigid seal, for example a fire seal, may be more likely to be urged out of position during installation, for example due to increased rigidity and/or lack of conforming when deformed. The sealing arrangement may therefore be advantageous to fire seals.

A gas turbine may comprise the sealing arrangement as claimed herein.

The method may comprise pulling each elongate member.

The method may further comprise the step of positioning an elongate member through the gap.

An (for example each) elongate member may be gripped from a position external (for example distal) to the first component and/or second component through the gap. A method step may comprise positioning the elongate member through or in the gap. A method step may comprise gripping the elongate member that is positioned through or in the gap. A separate tool may be used to grip the elongate member.

The method may further comprise the step of forming the seal by attaching the seal to the first component.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a perspective view of a panel before installation;
**Figure 3a** is a sectional side view of a seal arrangement before installation;
**Figure 3b** is a sectional side view of the seal arrangement of Figure 3b after installation;
**Figure 4a** is a sectional side view of a seal arrangement comprising an elongate member before installation;
**Figure 4b** is a sectional side view of the seal arrangement of Figure 4b after installation;
**Figure 4c** is a sectional side view of the seal arrangement showing the elongate member being pulled;
**Figure 4d** is a sectional side view of the seal arrangement after being positioned in the recess;
**Figure 5a** is a perspective view of a seal arrangement of a panel;
**Figure 5b** shows a close up perspective view of the elongate members of the seal arrangement of Figure 5a;
**Figure 6** shows a perspective view of a core fairing of a gas turbine engine.

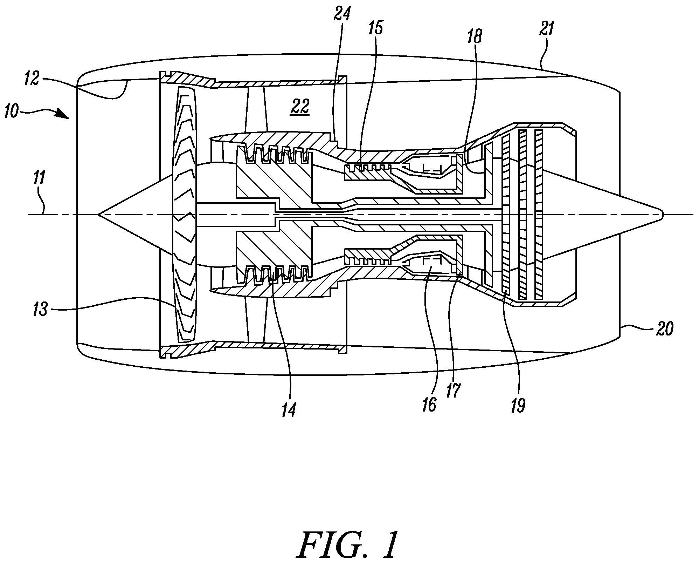

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20. A core fairing 24 surrounds the core. The core fairing 24 defines a fire boundary.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

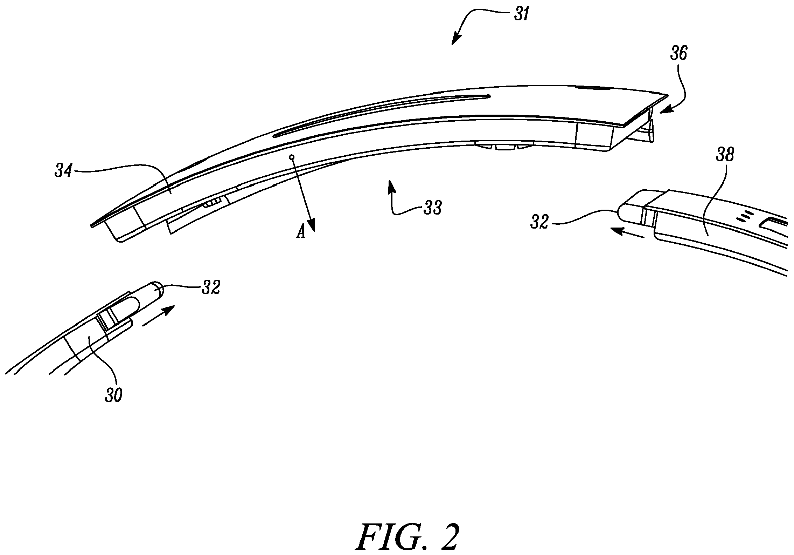

Figure 2 shows a panel assembly before installation. A first panel 30, second panel 34 and third panel 38 are shown. The first panel 30 and third panel 38 may be part of the same larger panel, with a cut out region for the second panel 34. Seals 32 extend away from the first panel 30 and third panel 38. In the Figure 2 example the seal 32 is hollow with end caps. In other embodiments the seal may be solid. The second panel 34 has an installation direction A. The second panel 34 has a lip 36 that forms part of a recess when installed. When installed the seal 32 fits underneath the lip 36. The second panel 34 has an inner side 33 and an outer side 31. In the Figure 2 example the panels are curved, for example due to being part of a gas turbine engine. Once installed, access to the inner side 33 may be limited. Access to a position external to the seal is therefore easier from the outer side 31. An inner surface of the panels may face the inner side 33 and/or internal portion of the produce, for example gas turbine engine. An outer surface of the panels may face the outer side 31 and/or external portion of the product, for example gas turbine engine.

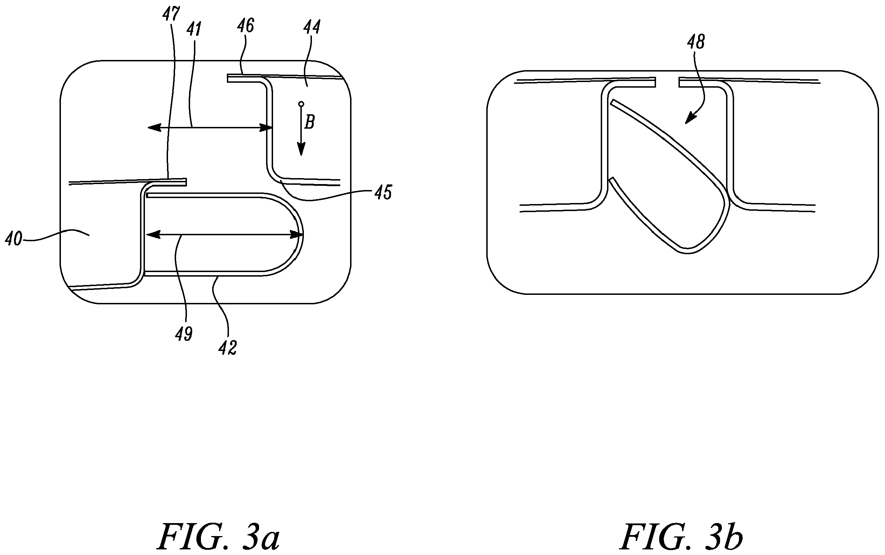

Figure 3a and 3b show how a seal 42 can be misaligned after installation. Figure 3a shows a first component 40, a second component 44 and a seal 42. The seal 42 extends away from the first component 40.

The first component 40 has a first lip 47 and the second component 44 has a second lip 46. When installed the first lip 47 and second lip 46 form part of a recess 48 between the first component 40 and second component 44.

The second component 44 is installed in direction B relative to the first component 40. As can be observed in Figure 3a, the seal 42 extends further than the width of the recess. An uncompressed seal bridging dimension 49 is greater than the sealing dimension 41. As the second component 44 is installed relative to the first component 40 the seal is urged into the position shown in Figure 3b. For example a shoulder 45 of the second component 44 contacts the seal and pushes it downwards (for example in direction B). Thus instead of bridging the recess, the seal forms a less reliable and/or effective contact between the first component 40 and second component 44.

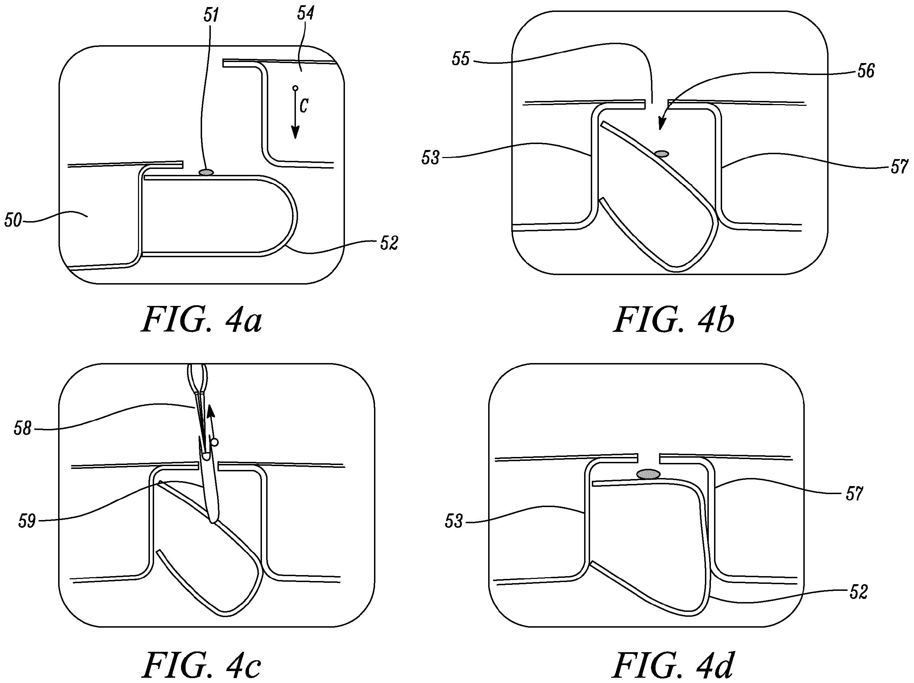

Figures 4a to 4d show a method of positioning a seal assembly. Figure 4a shows a first component 50 and a second component 54. The seal 52 may be attached to the first component 50, for example with adhesive. A seal 52 extends away from the first component 50. The seal has an elongate member 51 that is attached to and extends away from the seal 52. The elongate member is flattened in Figure 4a so that only its cross section is visible; however its length is visible in Figure 4c. Figure 4a shows the arrangement of the first component 50 and second component 54 before installation. The installation direction C is shown.

Figure 4b shows the arrangement of Figure 4a after installation. A recess 56 is formed between the first component 50 and second component 54. In the Figure 4b example the recess has a first wall 53 and an opposing second wall 57. Figure 4b shows a gap 55, which in the Figure 4b example is formed between the first component 50 and second component 54. The gap 55 provides a passage between the recess 56 and a position external to components, for example a position above the first component 50 and second component 54 in the Figure 4b example.

Similar to Figure 3b the seal 52 has been urged away from the recess. Figure 4c shows how the elongate member 59 is extended such that it extends through the gap 55. In the Figure 4c example the elongate member 59 is raised from a position where it is lying substantially flat to the seal 52 to a position where it is angled relative to the surface of the seal 52. The elongate member 59 can be raised until it is perpendicular to a surface of the seal 52. In the Figure 4c example a pair of pliers 58 is shown gripping the elongate member 59 at a position external (for example distal) to the recess 56 and the first component 50 and second component 54. However in other embodiments any method suitable for gripping the elongate member 59 may be used. Alternatively the elongate member 59 may have a gripping feature, for example to co-operate with a pulling tool.

After the elongate member 59 is pulled upwards as shown in the Figure 4c example the seal 52 is correctly positioned as shown in Figure 4d. The elongate member 59 is returned to its flat position. The seal is in a compression fit in the recess 56, for example between the first wall 53 and the second wall 57. In this configuration the seal has been squashed in a horizontal direction (with respect to the figure) and expanded in the vertical direction. In this fit, the seal 52 is compressed between the first wall 53 and second wall 57 and exerts a force on each. The seal 52 is held in the recess by these compression forces and/or compression fit. The seal 52 bridges the gap between the first wall 53 and the second wall 57 and is in a good position, i.e. reliable and/or effective, for sealing between the first component 50 and the second component 54.

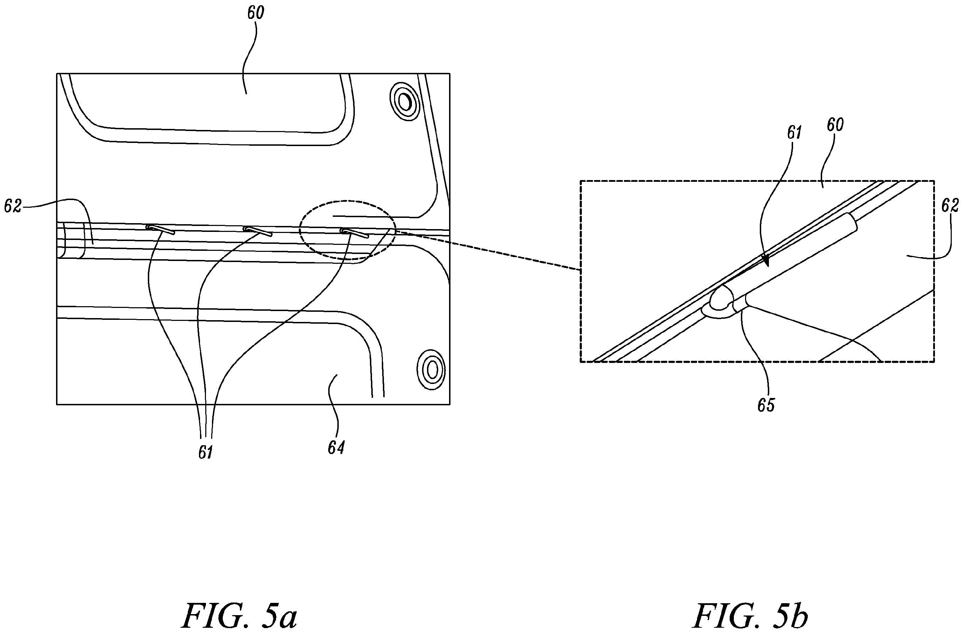

Figure 5a and 5b show a perspective view of the seal arrangement. Figure 5a shows a first panel 60. A seal 62 extends away from an edge of the first panel 60, for example in a similar manner to the Figure 4a arrangement. The seal 62 is attached to the first panel 60 along its length. Three elongate members 61 extend away from the seal 62. The elongate members 61 lie substantially flat with respect to the seal 62. A second panel 64 is shown transparently in Figure 5a. Figure 5a shows the first panel 60 and second panel 64 (shown transparently) installed adjacent each other in a similar arrangement to the Figure 4d example.

Figure 5b shows an expanded view of the first panel 60, seal 62 and a single elongate member 61. As can be seen in Figure 5b, the elongate member is integral with the seal 62. The elongate member 61 is attached to the seal 62 at a mounting point 65. The arrangement of the mounting point 65 ensures that when not being used to position the seal, the elongate member 61 lies flat. The elongate member 61 is flexible such that it can be raised up away from the seal 62 to be in the arrangement shown in Figure 4c.

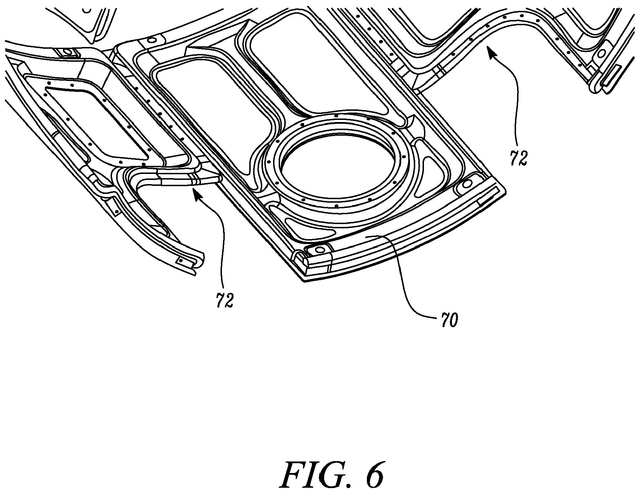

Figure 6 shows a core fairing 70 of a gas turbine engine. Seals 72, that form part of the seal arrangement as described herein, extend away from the core fairing 70 for engagement with another panel and/or component of the gas turbine engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. An elongate compressible seal for sealing between a first component and a second component, the seal comprising a plurality of elongate members each attached at a first end to an outer surface of the seal for aiding positioning of the seal.

2. The seal according to claim 1, wherein the elongate members are attached to the seal such that they lie substantially flat when not aiding positioning of the seal.

3. The seal according to claim 1 or claim 2, wherein the seal is a fire seal, for example suitable for sealing in fire conditions.

4. A sealing arrangement comprising a first component and a seal according to any one of the previous claims, wherein optionally the seal is attached to the first component.

5. The sealing arrangement according to claim 4, further comprising a second component and a recess between the first component and second component, and wherein the elongate members are suitable for pulling the seal, from a position external to the first component and second component, into a compression fit within the recess.

6. The sealing arrangement according to claim 5, wherein when the first component and second component are in an installed position, an elongate member can be accessible through a gap in the first component and/or second component.

7. The sealing arrangement according to any one of claims 4 to 6, wherein the recess comprises a sealing distance, and wherein when uncompressed the seal has a seal bridging dimension greater than 1.1, 1.2, 1.3, 1.4 or 1.5 the sealing distance.

8. The sealing arrangement according to any one of claims 5 to 7, wherein the installation of the second component relative to the first component urges the compressible seal away from the recess.

9. The sealing arrangement according to any one of claims 4 to 8, wherein the first component and second component are panels of a gas turbine engine.

10. A gas turbine engine comprising the sealing arrangement according to any one of claims 4 to 9.

11. A method of forming a sealing arrangement according to any one of claims 4 to 9, the method comprising the step of pulling one or more elongate members to position the seal in a compression fit within the recess.

12. The method according to claim 11, further comprising the step of positioning an elongate member through the gap.

13. The method according to claim 11 or 12, further comprising the step of forming the seal by attaching the seal to the first component.
